# EUROPÄISCHE PATENTANMELDUNG

(11) **EP 1 001 636 A2**
(43) Veröffentlichungstag der Anmeldung: **17.05.2000**
(21) Anmeldenummer: 99440304.6
(22) Anmeldetag: 10.11.1999
(51) Int. Cl.: H04Q 3/00

(54) **Verfahren, Programmodule, Server und Überwachungseinrichtung zur Bearbeitung von Alarmmeldungen eines Netzelementes**

(30) Priorität: 13.11.1998 DE 19852514
(71) Anmelder: ALCATEL, 75008 Paris (FR)
(72) Erfinder: Bollensen, Lutz, 12557 Berlin (DE); Rommel, Werner, Dr., 10369 Berlin (DE); Suckow, Ralf, 10318 Berlin (DE)
(74) Vertreter: Rausch, Gabriele, Dr.

(57) **Zusammenfassung**

Die vorliegende Erfindung betrifft ein Verfahren zur Bearbeitung von Alarmmeldungen mindestens eines Netzelementes (NE1, NE2), das von einer Überwachungseinrichtung (CS) überwacht wird und das Alarmmeldungen sendet, sowie Programmodule, einen Server, eine Überwachungseinrichtung und Speichermittel mit Programmodulen hierfür.
Bei dem Verfahren sendet das Netzelement Alarmmeldungen zunächst an eine Alarmeinrichtung (AS), die die Alarmmeldungen empfängt und abspeichert. Eine Überwachungseinrichtung (CS) sendet dann eine Abfrage nach gespeicherten Alarmmeldungen an die Alarmeinrichtung. Diese empfängt die Abfrage und sendet daraufhin eine Antwort mit einer Information über die gespeicherten Alarmmeldungen an die Überwachungseinrichtung, welche die Antwort anschließend auswertet. In der Antwort ist vorteilhafterweise eine Information enthalten, wieviele Alarmmeldungen von dem Netzelement durch die Alarmeinrichtung empfangen worden sind.

## Beschreibung

Die vorliegende Erfindung betrifft ein Verfahren zur Bearbeitung von Alarmmeldungen eines Netzelementes, sowie ein Programmodul gemäß dem Oberbegriff des Anspruchs 7 hierfür, ein Programmodul gemäß dem Oberbegriff des Anspruchs 8 hierfür, einen Server gemäß dem Oberbegriff des Anspruchs 9 hierfür, eine Überwachungseinrichtung gemäß dem Oberbegriff des Anspruchs 10 hierfür, ein Speichermittel gemäß Anspruch 11 und ein Speichermittel gemäß Anspruch 12 hierfür..

Telekommunikationsnetze werden üblicherweise durch Leitsysteme, sogenannte 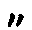 Network Management" Systeme überwacht und gesteuert. Ein solches Leitsystem ist im allgemeinen über ein eigenes Datennetzwerk, ein sogenanntes DCN (Data Communications Network), mit den Netzelementen eines Telekommunikationsnetzes verbunden, z.B. mit Vermittlungsstellen, Zugangseinrichtungen, Cross-Connects etc.. Das Leitsystem ist dabei ein Teil eines sogenannten TMN (Telecommunications Management Network). Das Leitsystem seinerseits besteht im einfachsten Fall aus einem einzelnen Steuerrechner, zumeist jedoch aus einem Netzwerk von Steuerrechnern, sogenannten Servern, an die Bedienplätze in Form von Terminals oder sogenannten Clients angeschlossen sind. Einen kurzen Überblick über die Funktionen eines Network Management Systems gibt z.B. Gerd Siegmund in seinem Buch 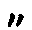 Technik der Netze", 3. Auflage, erschienen 1996 im R. v. Decker's Verlag, Hüthig GmbH, Heidelberg (ISBN 3-7685-2495-7) auf den Seiten 487-488 unter der Überschrift 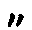 Management von Kommunikationsnetzen".

Das Leitsystem steuert Funktionen innerhalb des Telekommunikationsnetzes, indem das Leitsystem z.B. geänderte Betriebsparameter an ein Netzelement sendet, so daß dieses Netzelement ein an aktuelle Erfordernisse angepaßtes Betriebsverhalten aufweist. Ferner überwacht das Leitsystem die Funktionen seiner angeschlossenen Netzelemente und damit die Funktionen des Telekommunikationsnetzes, indem die Netzelemente Daten an das Leitsystem melden, die z.B. aktuelle Betriebsparameter eines Netzelementes oder das Verkehrsaufkommen innerhalb des Telekommunikationsnetzes betreffen. Wenn in einem der Netzelemente eine Störung auftritt, z.B. wegen Ausfall einer Komponente des Netzelementes, wegen einer Überlastung oder wegen Datenübermittlungsfehlern, meldet dieses Netzelement eine solche Störung an das Leitsystem in Form einer Alarmmeldung. Solche Alarmmeldungen werden von dem Netzelement unverzögert und bevorzugt vor anderen Meldungen an das Leitsystem gemeldet und durch das Leitsystem dann auch bevorzugt bearbeitet, so daß z.B. eine Störung baldmöglichst erkannt und beseitigt werden kann. Sofern die Anzahl eintreffender Alarmmeldungen innerhalb einer bestimmten Zeitperiode eine durch Auslegung des Leitsystemes definierte Belastungsgrenze nicht überschreitet, ist eine solche bevorzugte und unmittelbare Verarbeitung von Alarmmeldungen durch das Leitsystem unproblematisch. Wird jedoch diese Belastungsgrenze überschritten, z.B. wenn eine Störung eine Vielzahl von Netzelementen des gesteuerten Telekommunikationsnetzes betrifft oder wenn ein Netzelement eine Vielzahl Alarmmeldungen auslöst, so können diese Alarmmeldungen nicht mehr ausreichend schnell von dem Leitsystem verarbeitet werden, weil z.B. eine Bedienoberfläche des Leitsystemes nicht mehr ausreichend schnell neu eintreffende Alarmmeldungen anzeigen kann. In einem solchen Überlastfall ist es dann auch nicht mehr möglich, die für die Alarmmeldungen ursächliche Störung durch geeignete Steuermaßnahmen zu beseitigen.

Aufgabe der Erfindung ist es, eingehende Alarmmeldungen in einem Leitsystem effizient zu verarbeiten.

Diese Aufgabe wird durch ein Verfahren gemäß der technischen Lehre des Anspruchs 1, sowie ein Programmodul gemäß der technischen Lehre des Anspruchs 7, ein Programmodul gemäß der technischen Lehre des Anspruchs 8, einen Server gemäß der technischen Lehre des Anspruchs 9, eine Überwachungseinrichtung gemäß der technischen Lehre des Anspruchs 10 und ein Speichermittel gemäß der technischen Lehre des Anspruchs 11 und ein Speichermittel gemäß der technischen Lehre des Anspruchs 12 gelöst. Weitere vorteilhafte Ausgestaltungen der Erfindung sind den abhängigen Ansprüchen und der Beschreibung zu entnehmen.

Der Erfindung liegt hierbei der Gedanke zugrunde, Netzelemente ihre Alarmmeldungen nicht direkt an eine sie überwachende und gegebenenfalls steuernde Überwachungseinrichtung senden zu lassen, sondern an eine Alarmeinrichtung, die eingehende Alarmmeldungen in einem Speicher vermerkt und so einen Alarmzustand für das Netzelement führt. Die Alarmeinrichtung kann z.B. ein Server-Rechner innerhalb eines Leitsystemes sein. Der Alarmzustand wird dann von einer Überwachungseinrichtung bei der Alarmeinrichtung abgefragt z.B. im Rahmen einer zyklischen Aktualisierung einer Bedienoberfläche der Überwachungseinrichtung. Die Überwachungseinrichtung kann z.B. ein Client-Rechner sein, der an den Server angeschlossen wird.

Die Alarmeinrichtung kann die Alarmmeldungen auch zunächst sammeln und der Überwachungseinrichtung die gesammelten Alarmmeldungen nicht jeweils einzeln senden, sondern in Form einer Sammelinformation mit einem Hinweis, wieviele Alarmmeldungen von dem Netzelement eingegangen sind. Dabei kann sich die Alarmeinrichtung auf die Summierung jeweils gleichartiger Alarmmeldungen beschränken oder die eingegangenen Alarmmeldungen bereits klassifizieren, z.B. nach der Wichtigkeit, die eine Alarmmeldung jeweils besitzt, oder z.B. nach Quellen der Alarmmeldungen, beispielsweise nach Baugruppen, innerhalb des Netzelementes. In einer weiteren Ausgestaltung der Erfindung verwaltet die Alarmeinrichtung eingehende Alarmmeldungen von mehreren Netzelementen und versorgt ihrerseits mehrere an sie angeschlossene Überwachungseinrichtungen mit aktuellen Alarmzuständen.

Im folgenden werden die Erfindung und ihre Vorteile anhand eines Ausführungsbeispiels unter Zuhilfenahme der Zeichnungen dargestellt.
- Figur 1: zeigt eine Anordnung zur Ausführung des erfindungsgemäßen Verfahrens mit einer erfindungsgemäßen Alarmeinrichtung AS, einer erfindungsgemäßen Überwachungseinrichtung CS und an die Alarmeinrichtung AS angeschlossenen Netzelementen NE1 und NE2.
- Figur 2: zeigt eine Anordnung zur Ausführung des erfindungsgemäßen Verfahrens mit einer Kombinationseinrichtung ACS und an die Kombinationseinrichtung ACS angeschlossenen Netzelementen NE1 und NE2.
- Figur 3: zeigt ein Ablaufdiagramm eines erfindungsgemäßen Programmodules PAS zur Erfassung von Alarmmeldungen.
- Figur 4: zeigt ein Ablaufdiagramm eines erfindungsgemäßen Programmodules PCS zur Überwachung eines Netzelementes.

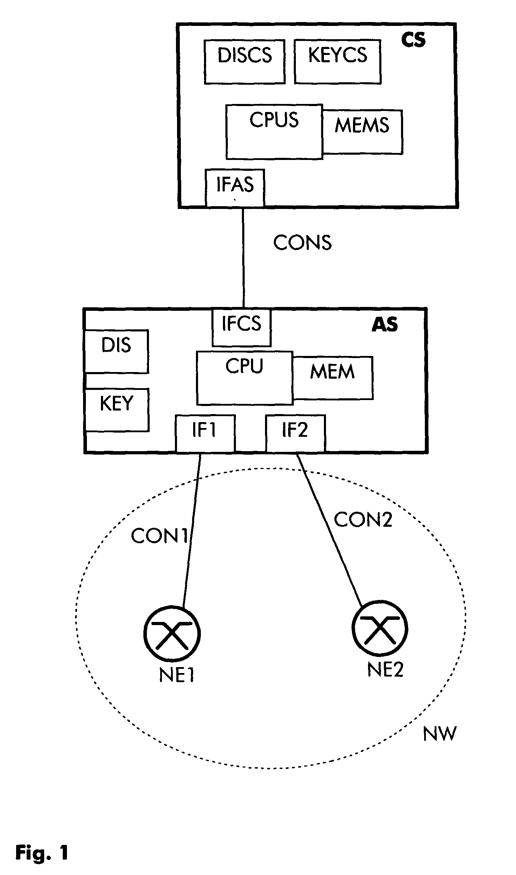

In Figur 1 ist eine Anordnung zur Ausführung des erfindungsgemäßen Verfahrens dargestellt, bei der eine Netzelement NE1 über eine Verbindung CON1 und ein Netzelement NE2 über eine Verbindung CON2 mit einer Alarmeinrichtung AS verbunden sind. Die Alarmeinrichtung AS ist über eine Verbindung CONS mit eine Überwachungseinrichtung CS verbunden, welche die Netzelemente NE1 und NE2 überwacht und steuert. Die Netzelemente NE1 und NE2 gehören zu einem Telekommunikationsnetz NW und können z.B. Vermittlungsstellen, Zugangseinrichtungen oder Cross-Connects sein. Das Telekommunikationsnetz NW enthält neben den Netzelementen NE1 und NE2 auch in Figur 1 nicht dargestellte Verbindungsleitungen und weitere, ebenfalls nicht dargestellte Netzelemente. Auch diese Netzelemente können an die Alarmeinrichtung AS angeschlossen sein. Die Verbindungen CON1, CON2 und CONS können Teil eines sogenannten Telecommunications Management Networks (TMN) sein, über welches das Telekommunikationsnetz NW gesteuert werden kann.

Die Alarmeinrichtung AS ist ein Server-Rechner, z.B. ein Personal Computer oder eine Workstation, oder ein Netzwerk aus Server-Rechnern. Die Alarmeinrichtung AS ist in Figur 1 sehr schematisch mit nur wenigen, wesentlichen Komponenten dargestellt und weist lediglich ein Steuermittel CPU, einen Speicher MEM, eine Anzeigevorrichtung DIS, z.B. einen Bildschirm, und ein Tastenfeld KEY sowie Anschlußvorrichtungen IF1, IF2 und IFCS auf. Diese Komponenten sind untereinander durch in Figur 1 nicht dargestellte Verbindungen miteinander verbunden. Das Steuermittel CPU kann z.B. ein Prozessor sein, der Programme ausführt, die in dem Speicher MEM gespeichert sind. Die Verbindung CON1 ist über die Anschlußvorrichtung IF1, Verbindung CON2 über die Anschlußvorrichtung IF2 und die Verbindung CONS über die Anschlußvorrichtung IFCS an die Alarmeinrichtung AS angeschlossen. Die Anschlußvorrichtungen IF1, IF2 und IFCS sind z.B. Anschlußbaugruppen oder Schnittstellenmodule.

Die Überwachungseinrichtung CS überwacht die Funktionen der Netzelemente NE1 und NE2, zeigt z.B. mit Hilfe einer graphischen Bedienoberfläche, einer sogenannten GUI (Graphical User Interface), deren Betriebszustände und aktuelle Belastung etc. an. In dem Beispiel in Figur 1 können die Netzelemente NE1 und NE2 mit der Überwachungseinrichtung CS auch gesteuert werden, indem z.B. an der Bedienoberfläche Steuerbefehle eingegeben und von der Überwachungseinrichtung CS über die Verbindung CONS, die Alarmeinrichtung AS und die Verbindung CON1 an das Netzelement NE1 oder die Verbindung CON2 an das Netzelement NE2 gesendet werden. Auch die Überwachungseinrichtung CS kann wie die Alarmeinrichtung AS ein Personal Computer oder eine Workstation sein. Die Überwachungseinrichtung CS weist ein Steuermittel CPUS und einen Speicher MEMS sowie eine Anschlußvorrichtung IFAS auf, die z.B. ein Schnittstellenmodul ist. Das Steuermittel CPUS ist z.B. ein Prozessor, der Programme ausführt, die in dem Speicher MEMS gespeichert sind. Außerdem weist die Überwachungseinrichtung CS eine Anzeigevorrichtung DISCS auf, z.B. einen Monitor, auf dem die Überwachungseinrichtung CS Meldungen und Benutzerinformationen anzeigen kann. Eingaben und Steuerbefehle können an die Überwachungseinrichtung CS über ein Tastenfeld KEYCS gegeben werden. Es ist auch möglich, daß die Überwachungseinrichtung CS und die Alarmeinrichtung AS nach dem sogenannten Client-Server-Prinzip zusammenarbeiten, wobei die Überwachungseinrichtung CS dann die Rolle eines sogenannten Client-Rechners und die die Alarmeinrichtung AS die Rolle eines Server-Rechners einnimmt.

Wenn z.B. in dem Netzelement NE1 eine Störung oder ein kritischer Betriebszustand auftritt, sendet das Netzelement NE1 eine Alarmmeldung an das sie überwachende System. Eine Vielzahl von möglichen Gründen für eine Alarmmeldung ist z.B. angegeben in der CCITT-Empfehlung X.733 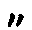 Data Communication Networks / Information Technology - Open Systems Interconnection - Systems Management: Alarm Reporting Function" der ITU (International Telecommunication Union) von 1992 im Kapitel 8.1.2.1 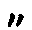 Probable Cause" (CCITT = Comité Consultatif International Télégraphique et Téléphonique). Durch die in Figur 1 gezeigte Anordnung, wird die von dem Netzelement NE1 erzeugte Alarmmeldung jedoch nicht direkt in die Überwachungseinrichtung CS gesendet, um dort z.B. unmittelbar in eine Anzeige auf der Anzeigevorrichtung DISCS umgesetzt zu werden, sondern über die Verbindung CON1 an die Alarmeinrichtung AS. Diese empfängt die Alarmmeldung über die Anschlußvorrichtung IF1 und speichert die Alarmmeldung oder wenigstens wesentliche Informationen aus der Alarmmeldung in den Speicher MEM ein. Der Vorgang des Empfangens kann auch die protokollseitige Bearbeitung der Alarmmeldung einschließen, z.B. das Senden einer Quittiernachricht an das Netzelement NE1, in welcher der korrekte Empfang der Alarmmeldung quittiert wird.

Die Überwachungseinrichtung CS erfährt von der eingetroffenen Alarmmeldung, indem die Überwachungseinrichtung CS eine Anfragenachricht an die Alarmeinrichtung AS über die Verbindung CONS sendet, in der sie nach eingetroffenen Alarmmeldungen des Netzelementes NE1 oder bereits detailliert nach eingetroffenen Alarmmeldungen von Bestandteilen, z.B. Baugruppen, des Netzelementes NE1 fragt. Die Anfragenachricht kann bei der Überwachungseinrichtung CS z.B. durch eine Bedienereingabe an dem Tastenfeld KEYCS oder durch einen zyklischen Prozeß ausgelöst werden, den das Steuermittel CPUS innerhalb einer festgelegten Zeitspanne wiederholt, um z.B. eine Anzeige an der Anzeigevorrichtung DISCS zu aktualisieren. Die Alarmeinrichtung AS liest nach dem Empfang einer solchen Anfragenachricht die in den Speicher MEM diejenigen Informationen aus dem Speicher MEM aus, die Alarmmeldungen des Netzelementes NE1 betreffen, und sendet diese Informationen an die Überwachungseinrichtung CS. Die Überwachungseinrichtung CS empfängt die Informationen und verarbeitet sie weiter, z.B. indem die Überwachungseinrichtung CS die Informationen auf der Anzeigevorrichtung DISCS anzeigt oder aufgrund der Information einen Steuerbefehl an das Netzelement NE1 sendet, der z.B. ein Problem beseitigt, das die der Information zugrundeliegende Alarmmeldung ausgelöst hat. Ebenso wie das Netzelement NE1 sendet das Netzelement NE2 Alarmmeldungen zur Einspeicherung an die Alarmeinrichtung AS, so daß dann die Überwachungseinrichtung CS dort auch von dem Netzelement NE2 eingegangene Alarmmeldungen abfragen kann.

Wie im obigen Beispiel gezeigt, ist die Erfindung für die Bearbeitung einzelner Alarmmeldungen geeignet, wobei sich besonders vorteilhaft auswirkt, daß der Zeitpunkt der Alarmbearbeitung durch die Überwachungseinrichtung CS bestimmt wird. Wenn z.B. ein Benutzer gerade eine Eingabe an dem Tastenfeld KEYCS gemacht hat und die Überwachungseinrichtung CS mit daraus resultierenden Folgehandlungen beschäftigt ist, kann die Überwachungseinrichtung CS die Bearbeitung einer Alarmmeldung solange verschieben, bis die Folgehandlungen abgeschlossen sind. Außerdem wird durch die Vorverarbeitung der Alarmmeldung durch die Alarmeinrichtung AS sichergestellt, daß die Alarmmeldung nicht verlorengeht und auch dann in dem Speicher MEM vermerkt wird, wenn z.B. die Überwachungseinrichtung CS wegen Bearbeitung anderer Aufgaben zeitweilig keine Alarmmeldungen bearbeiten kann.

Besonders deutlich wird jedoch der Vorteil Erfindung, wenn eine Vielzahl von Alarmmeldungen innerhalb kurzer Zeit verarbeitet werden sollen. Ist z.B. eine an das Netzelement NE1 angeschlossene, in Figur 1 nicht dargestellte Übertragungsleitung gestört, aber nicht vollständig außer Betrieb, treten bei jeder Übertragung, die über diese Übertragungsleitung erfolgt, erneut Fehler auf, die dann jeweils eine oder mehrere Alarmmeldungen zur Folge haben. Die Alarmeinrichtung AS empfängt diese Alarmmeldungen und speichert deren Infomationsgehalt in seinen Speicher MEM ein. Dabei genügt es, daß die Alarmeinrichtung AS z.B. beim Eingang einer ersten Alarmmeldung, die auf die gestörte Übertragungsleitung hinweist, in dem Speicher MEM einen Merker 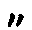 Übertragungsleitung an Netzelement NE1 gestört" setzt, einen zugehörigen Zähler initialisiert und für jede weitere eingehende derartige Alarmmeldung lediglich den Zähler inkrementiert. Die Alarmeinrichtung AS sammelt auf diese Weise alle Alarmmeldungen, die auf die gestörte Übertragungsleitung hinweisen. Wenn dann die Überwachungseinrichtung CS an die Alarmeinrichtung AS eine Anfrage nach Alarmmeldungen des Netzelementes NE1 sendet, antwortet die Alarmeinrichtung AS mit entweder mit einer Informationen, in der eine größere Anzahl von Alarmmeldungen des Netzelementes NE1 in einer einzigen Nachricht zusammengefaßt sind oder lediglich in einer besonders knappen Antwortnachricht, in der sowohl die Information 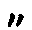 Übertragungsleitung an Netzelement NE1 gestört" enthalten ist, als auch die Information, wieviele Alarmmeldungen auf diesen Fehler hingewiesen haben. Im letzteren Fall kann die Überwachungseinrichtung CS beide Informationen zusammen an der Anzeigevorrichtung DISCS anzeigen. Auf diese Weise muß die Überwachungseinrichtung CS nicht Alarmmeldungen aufwendig einzeln aufarbeiten, sondern kann die Informationen einer Gruppe gesammelter, gleichartiger Alarmmeldungen in einem einzigen Verarbeitungsvorgang auf einmal verarbeiten. Außerdem wird so verhindert, daß auf einen Bediener der Überwachungseinrichtung CS eine Informationsflut von Alarmmeldungen einströmt, die der Bediener nicht mehr ausreichend schnell z.B. an der Anzeigevorrichtung DISCS wahrnehmen kann, um gegebenenfalls Maßnahmen zur Beseitigung der Störung zu veranlassen. Bei Bedarf jedoch kann die Überwachungseinrichtung CS die Alarmmeldungen eines Netzelementes statt in summierter Form auch detailliert und einzeln abfragen.

Weiterhin ist es möglich, daß die Alarmeinrichtung AS der Überwachungseinrichtung CS in der Antwortnachricht auf eine Anfrage nach eingegangenen Alarmmeldungen eines Netzelementes, z.B. des Netzelementes NE1, eine Statusinformation versendet, ob die Alarmeinrichtung AS seit einer der aktuellen Abfrage nach Alarmmeldungen vorausgehenden solchen Abfrage der Überwachungseinrichtung mindestens eine neue Alarmmeldung des Netzelementes NE1 empfangen hat. Die Überwachungseinrichtung CS muß nur dann die von einem Eingang neuer Alarmmeldungen abhängigen Verarbeitungsvorgänge ausführen, z.B. eine Aktualisierung der Anzeige auf Anzeigevorrichtung DISCS, wenn die Statusinformation darauf hinweist, daß neue Alarmmeldungen des Netzelementes NE1 bei der Alarmeinrichtung AS eingegangen sind.

Wie bereits im Zusammenhang mit der CCITT-Empfehlung X.733 angedeutet, senden das Netzelement NE1 und das Netzelement NE2 der Alarmeinrichtung AS Alarmmeldungen mit einer Vielzahl von unterschiedlichen Inhalten. Die Überwachungseinrichtung CS kann diese Alarmmeldungen zwar nach beliebigen Ordnungskriterien bearbeiten, Alarmmeldungen z.B. insbesondere nach Netzelement NE1 oder Netzelement NE2 sortiert, aber ansonsten lediglich in der Reihenfolge ihres Empfangs in den Speicher MEM einspeichern. Da jedoch die Alarmmeldungen sowohl unterschiedliche Inhalte als auch zumeist eine unterschiedliche Wichtigkeit haben, kann die Überwachungseinrichtung CS eingehende Alarmmeldungen auch klassifiziert nach ihren Inhalten sowie nach ihrer Wichtigkeit in den Speicher MEM einspeichern. Unterschiedliche Inhalte sind z.B. die bereits erwähnten möglichen Gründen für eine Alarmmeldung oder unterschiedliche Quellen für Alarmmeldungen innerhalb des Netzelementes NE1 oder des Netzelementes NE2, z.B. verschiedene Baugruppen. Unterschiedliche Wichtigkeiten sind z.B. in der obengenannten CCITT Empfehlung X.733 im Kapitel 7 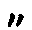 Model" in absteigender Wichtigkeit als 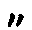 Critical", 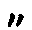 Major", 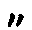 Minor" oder auch nur 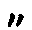 Warning" definiert. Die Kriterien für eine solche Klassifizierung können z.B. mit einer in dem Speicher MEM abgelegten Klassifizierungstabelle vorgegeben werden. Eine solche Klassifizierungstabelle kann auch von der Überwachungseinrichtung CS vorgegeben und an die Alarmeinrichtung AS gesendet werden, z.B. im Zusammenhang mit einer Anfrage nach Alarmmeldungen. Die Alarmeinrichtung AS kann dann der Überwachungseinrichtung CS eine Anfrage beantworten, in der nur Alarmmeldungen einer bestimmten Gruppe angefragt werden, z.B. Alarmmeldungen von besonders hoher Wichtigkeit, Alarmmeldungen mit einem bestimmten Inhalt oder Alarmmeldungen die Kombinationen aus Anfragekriterien genügen.

Es ist weiterhin möglich daß die Überwachungseinrichtung CS an die Alarmeinrichtung AS eine Anmeldung sendet und daß die Alarmeinrichtung AS eine Anfrage der Überwachungseinrichtung CS nach Alarmmeldungen nur dann beantwortet, wenn die Überwachungseinrichtung CS bei der Alarmeinrichtung AS angemeldet ist. Eine solche Anmeldung ist insbesondere dann sinnvoll, wenn die Alarmeinrichtung AS neben der Überwachungseinrichtung CS auch weitere, in Figur 1 nicht dargestellte Überwachungseinrichtungen bedient. Im Rahmen einer solchen Anmeldung kann die Überwachungseinrichtung CS der Alarmeinrichtung AS angeben, welche Netzelemente die Überwachungseinrichtung CS überwachen will. Die Überwachungseinrichtung CS kann so z.B. bestimmen, daß sie nur das Netzelement NE1 überwachen will, während eine zweite, in Figur 1 nicht dargestellte Überwachungseinrichtung das Netzelement NE2 überwacht. Die Alarmeinrichtung AS antwortet dann der Überwachungseinrichtung CS bei einer Anfrage nach eingegangenen Alarmmeldungen nur mit solchen Informationen, die Alarmmeldungen des Netzelementes NE1 betreffen, und der zweiten Überwachungseinrichtung nur mit solchen Informationen, die Alarmmeldungen des Netzelementes NE2 betreffen. Damit sich die Überwachungseinrichtung CS bei Anfragen nach Alarmmeldungen bei der Alarmeinrichtung AS identifizieren kann, kann die Alarmeinrichtung AS der Überwachungseinrichtung CS im Zuge der Anmeldung auch eine Kennung zuteilen und übermitteln. Bei der Anmeldung kann die Überwachungseinrichtung CS der Alarmeinrichtung AS auch die vorgeben, nach welchen Klassifizierungskriterien Alarmmeldungen klassifiziert werden sollen.

Wenn sich die Überwachungseinrichtung CS bei der Alarmeinrichtung AS anmeldet, kann die Anmeldenachricht der Überwachungseinrichtung CS auch ein Paßwort enthalten, das für eine erfolgreiche Anmeldung einer Überprüfung standhalten muß.

In dem Beispiel aus Figur 1 sind die Alarmeinrichtung AS und die Überwachungseinrichtung CS jeweils getrennte Rechner, die für die ihnen zugeordnete Funktion ausgelegt sind, z.B. durch in den jeweiligen Speichern abgelegte Programme, mit denen die jeweiligen Funktionen von den Steuermitteln ausgeführt werden können. Es ist jedoch auch möglich, daß sowohl die Funktion der Überwachungseinrichtung CS, als auch die Funktion der Alarmeinrichtung AS von einem einzigen Rechner mit Hilfe zweier separater, für die jeweilige Funktion ausgelegter Programmodule ausgeführt werden. Diese Programmodule bestehen aus in einem Speicher gespeicherte und von einem Steuermittel lesbare und ausführbare Befehlssequenzen und werden üblicherweise in einer Programmiersprache, z.B. der Hochsprache 'C' oder der objektorientierten Programmiersprache 'C++', kodiert und in eine von dem Steuermittel lesbare und ausführbare Maschinensprache kompiliert.

Wenn ein Programmodul in einzelne Funktionseinheiten aufgeteilt ist, wie im folgenden noch erläutert wird, so werden diese Funktionseinheiten nach dem Kompilieren noch durch einen sogenanntes 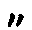 Linken" miteinander verbunden, so daß die Übergänge und Verzweigungen zwischen den einzelnen Funktionseinheiten, die sogenannten Programmsprünge, von dem Steuermittel bei der Ausführung des Programmodules nachvollzogen werden können.

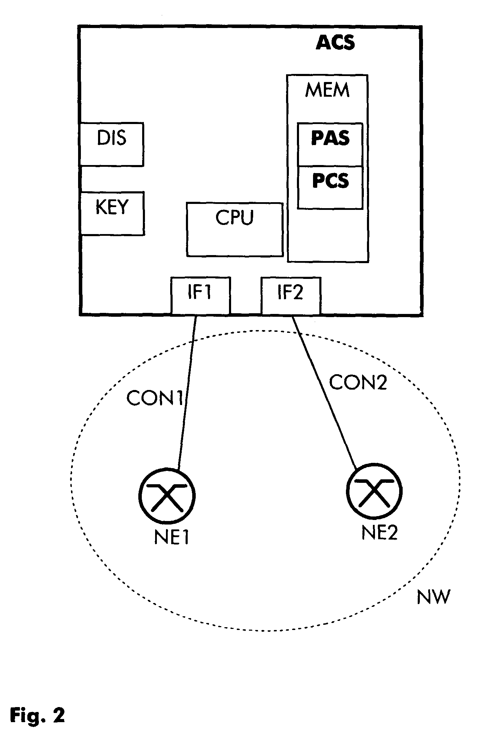

Figur 2 zeigt ein Beispiel für eine Lösung, bei der nur ein einziger Rechner zur Alarmerfassung und Netzelementüberwachung eingesetzt wird. Dort ist im Unterschied zu Figur 1 anstatt der Überwachungseinrichtung CS und der Alarmeinrichtung AS eine Kombinationseinrichtung ACS dargestellt, die sowohl die Funktionen der aus Figur 1 bekannten Überwachungseinrichtung CS als auch die Funktionen der Alarmeinrichtung AS erfüllt. Die Kombinationseinrichtung ACS weist im wesentlichen die von der Überwachungseinrichtung CS bekannten Komponenten Steuermittel CPU, Speicher MEM, Anzeigevorrichtung DIS, Tastenfeld KEY sowie die Anschlußvorrichtungen IF1 und IF2 auf. Die Funktion der Überwachungseinrichtung CS leistet die Kombinationseinrichtung ACS mit Hilfe eines Überwachungsprogrammodules PCS, die Funktionen der Alarmeinrichtung AS mit einem Alarmerfassungsprogrammodul PAS. Das Überwachungsprogrammodul PCS und das Alarmerfassungsprogrammodul PAS werden jeweils von dem Steuermittel CPU aus dem Speicher MEM geladen und dann als eigene Prozesse, sogenannte Tasks, mit Hilfe eines Multitasking-Betriebssystemes ausgeführt. Dabei wird beiden Prozessen sowie auch anderen, von der Kombinationseinrichtung ACS auszuführenden aber hier nicht näher erläuterten Prozessen aus einer sogenannten Zeitscheibe ein Anteil Betriebszeit des Steuermittels CPU zugeteilt. Durch eine sinnvolle Zuteilung von Betriebszeit wird sichergestellt, daß von den Netzelementen NE1 und NE2 gesendete Alarmmeldungen durch Alarmerfassungsprogrammodul PAS ausreichend schnell verarbeitet werden können, damit, wie oben bereits erwähnt, kein Rückstau oder gar Verlust von Alarmmeldungen auftritt. Dazu kann das Alarmerfassungsprogrammodul PAS mit einer höheren Priorität von dem Steuermittel CPU ausgeführt werden, als das Überwachungsprogrammodul PCS.

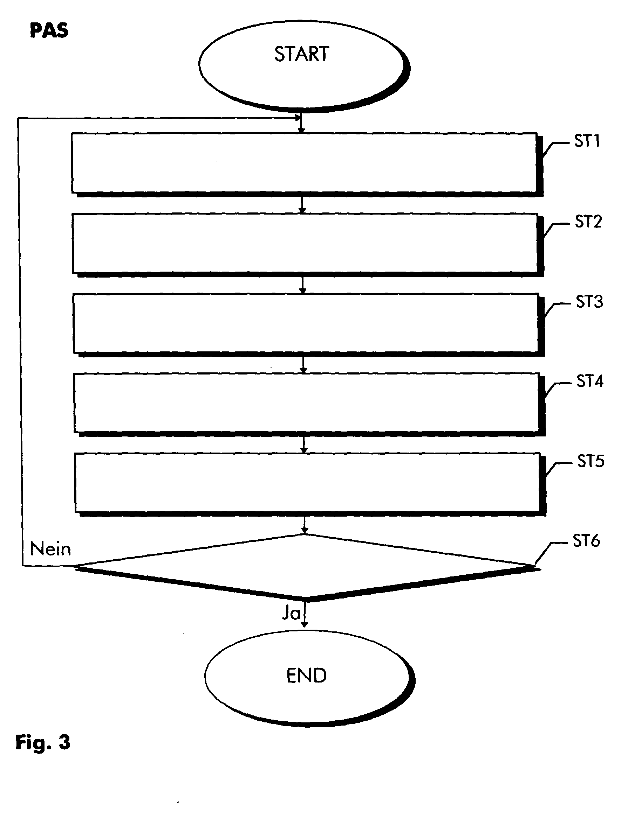

In Figur 3 ist das Alarmerfassungsprogrammodul PAS in seinen wesentlichen Funktionsschritten dargestellt. Im Interesse einer leicht verständlichen Darstellung ist das Alarmerfassungsprogrammodul PAS in Figur 3 in Form eines Ablaufdiagrammes dargestellt, in dessen Ablauf einzelne Schritte ausgeführt werden. Die einzelnen Schritte stehen jeweils für einen einzelnen Befehl oder eine Folge von Befehlen, die jeweils eine funktionale Einheit, eine sogenannte Funktion, bilden. Diese funktionale Auftrennung des Alarmerfassungsprogrammodules PAS ist praxisgerecht. Ausgehend von einem Startfeld START empfängt das Alarmerfassungsprogrammodul PAS in einem Schritt ST1 Alarmmeldungen von der Anschlußvorrichtung IF1 oder der Anschlußvorrichtung IF2. Dabei ist es möglich, daß das Alarmerfassungsprogrammodul PAS die Anschlußvorrichtung IF1 und IF2 in einem Pollingverfahren regelmäßig von sich aus abfragt oder daß das Alarmerfassungsprogrammodul PAS von den Anschlußvorrichtungen IF1 und IF2 beim Eingang einer Alarmmeldung ein Signal zum Empfang erhält. Die Anschlußvorrichtungen IF1 und IF2 können eine Alarmmeldung in Bezug auf für die Verbindungen CON1 oder CON2 festgelegte Kommunikationsprotokolle protokollseitig bereits vorverarbeiten und nur die in der Alarmmeldung enthaltene Nutzinformation an das Alarmerfassungsprogrammodul PAS weitergeben. Dabei können auch Alarmmeldungen ausgefiltert werden, so daß nur für das Alarmerfassungsprogrammodul PAS relevante Alarmmeldungen weitergegeben werden. Es ist aber auch möglich, daß die Anschlußvorrichtungen IF1 und IF2 eingegangene Alarmmeldungen lediglich auf der rein physikalischen Ebene empfangsseitig verarbeiten und daß das Alarmerfassungsprogrammodul PAS im dem Schritt ST1 die Alarmmeldungen protokollseitig weiterverarbeitet und z.B. jeweils eine Eingangsquittung für eine eingegangene Alarmmeldung sendet. Die Anweisungen des Schrittes ST1 sind in einer Eingabefunktionseinheit, z.B. in einem Unterprogramm, zusammengefaßt. In einem Schritt ST2 speichert das Alarmerfassungsprogrammodul PAS eine eingegangene Alarmmeldung in einen Speicher, z.B. dem Speicher MEM ein. Dabei kann die eingegangene Alarmmeldung den bereits erwähnten Klassifizierungskriterien folgend in einen bestimmten Bereich in dem Speicher MEM eingruppiert werden. In einem Schritt ST3 empfängt das Alarmerfassungsprogrammodul PAS eine Abfrage nach gespeicherten Alarmmeldungen von dem Überwachungsprogrammodul PCS, worauf das Alarmerfassungsprogrammodul PAS in einem Schritt ST4 den in Schritt ST2 beschriebenen Speicher wieder ausliest. In einem Schritt ST5 sendet das Alarmerfassungsprogrammodul PAS eine Antwort mit einer Information über die gespeicherten Alarmmeldungen an das Überwachungsprogrammodul PCS. In der Antwort können die Alarmmeldungen wie bereits im Zusammenhang mit der Alarmeinrichtung AS und der Überwachungseinrichtung CS bereits im summierter, zusammengefaßter Form enthalten sein oder nach Klassifizierungskriterien geordnet sein, z.B. nach Wichtigkeit oder nach Quelle der jeweiligen Alarmmeldungen. In einem Schritt ST6 wird überprüft, ob das Alarmerfassungsprogrammodul PAS nach Erfüllung des Schrittes ST5 weitere Alarmmeldungen erfassen soll. Ist dies der Fall, verzweigt das Alarmerfassungsprogrammodul PAS wieder in den Schritt ST1. Ansonsten endet das Alarmerfassungsprogrammodul PAS in einem Schritt END.

Die in Figur 3 gewählte sequentielle Darstellung des Alarmerfassungsprogrammodules PAS in einzelnen Funktionsschritten dient lediglich einer einfachen Darstellung. Ebenfalls möglich ist eine Darstellung in mehrfach durchlaufbaren, parallel angeordneten Funktionsblöcken. In einem Funktionsblock werden dann z.B. die Schritte ST1 und ST2 zusammengefaßt, d.h. der Empfang einer Alarmmeldung und der daran anschließende Eintrag in den Speicher, und in einen weiteren Funktionsblock die Schritte ST3, ST4 und ST5, d.h. die Anfrage nach gespeicherten Alarmmeldungen und die Antwort darauf. Solche Funktionsblöcke können mit Hilfe von Funktionsaufrufen von externen Programmodulen aufgerufen werden, z.B. von dem Überwachungsprogrammodul PCS. Auch eine externe Einrichtungen, z.B. die aus Figur 1 bekannte Überwachungseinrichtung CS, kann einen solchen Funktionsblock aufrufen, wenn das Überwachungsprogrammodul PCS z.B. für die Steuerung der aus Figur 1 bekannten Alarmeinrichtung AS eingesetzt wird. Die Schnittstellen der Funktionsblöcke können objektorientiert gestaltet sein, daß die Funktionsaufrufe mit Hilfe einer objektorientierten Sprache möglich sind, z.B. mit Hilfe der sogenannten IDL (= Interface Description Language), die Schnittstellen innerhalb der im Netzwerk-Management gebräuchlichen Common Object Request Broker Architecture ( = CORBA) beschreibt. Die Funktionsblöcke können jedoch auch als einzelne Prozesse von dem Steuermittel CPU ausgeführt werden, die z.B. durch Mechnismen der Interprozeßkommunikation, z.B. Nachrichten zwischen Prozessen, von externen Programmodulen aufgerufen werden können.

Ferner können die Schritte der Alarmerfassungsprogrammodules PAS auch erweitert oder ergänzt sein. Es kann z.B. im Rahmen des Schrittes ST2 eingegangene, gleichartige Alarmmeldungen auch summiert werden, wie im Zusammenhang mit der Alarmeinrichtung AS bereits ausgeführt worden ist. Außerdem sind im Rahmen des Alarmerfassungsprogrammodules PAS weitere Schritte möglich, z.B. ein Initialisierungsschritt, in dem der Speicher initialisiert wird, in den Alarmmeldungen eingetragen werden, oder ein Subskriptionsschritt, bei dem sich das Überwachungsprogrammodul PCS bei dem Alarmerfassungsprogrammodul PAS anmeldet.

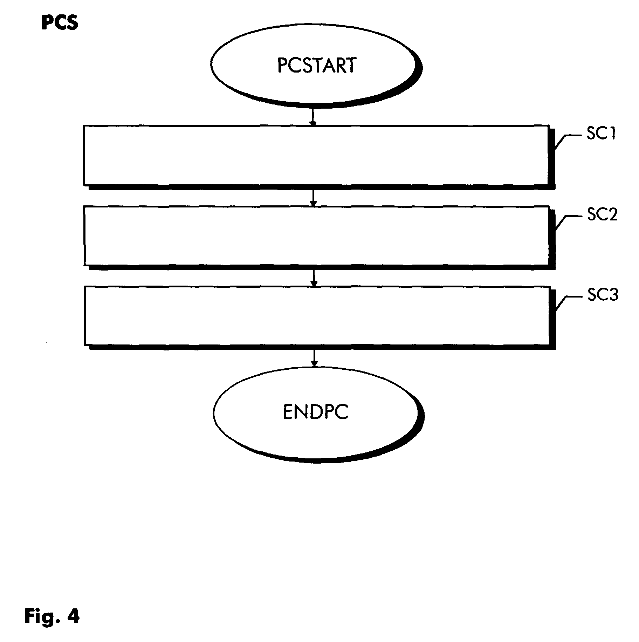

In Figur 4 ist das Überwachungsprogrammodul PCS in seinen wesentlichen Funktionsschritten dargestellt. Das Überwachungsprogrammodul PCS ist für die Zusammenwirkung mit dem Alarmerfassungsprogrammodul PAS oder aber auch mit der aus Figur 1 bekannten Alarmeinrichtung AS ausgelegt. Das Überwachungsprogrammodul PCS überwacht mindestens ein Netzelement, das Alarmmeldungen an die Alarmeinrichtung AS oder an das Alarmerfassungsprogrammodul PAS sendet. Ausgehend von einem Schritt STARTPC sendet das Überwachungsprogrammodul PCS in einem Schritt SC1 eine Abfrage nach gespeicherten Alarmmeldungen z.B. an das Alarmerfassungsprogrammodul PAS oder an die aus Figur 1 bekannte Alarmeinrichtung AS. In dieser Abfrage kann das Überwachungsprogrammodul PCS auch detailliert nur nach solchen Alarmmeldungen fragen, die einem oder mehreren Kriterien der bereits erwähnten Klassifizierungskriterien genügen. In einem Schritt SC2 empfängt das Überwachungsprogrammodul PCS eine Antwort mit einer Information über die gespeicherten Alarmmeldungen und wertet diese in einem Schritt SC3 aus. In dem Schritt kann das Überwachungsprogrammodul PCS z.B. eine Bildschirmanzeige mit den empfangenen Informationen generieren oder Maßnahmen zur Beseitigung der Ursache auslösen, die zum Eingang der Alarmmeldungen geführt hat, z.B. zur Beseitigung einer Überlast des überwachten Netzelementes eine Umlenkung von Verkehr veranlassen. Mit Erfüllung des Schrittes SC3 endet das Überwachungsprogrammodul PCS in einem Schritt ENDPC. Wie das Alarmerfassungsprogrammodul PAS kann auch das Überwachungsprogrammodul PCS z.B. in Funktionsblöcke gegeliedert sein, die CORBA-Schnittstellen aufweisen oder kann noch weitere, hier nicht näher dargestellte Funktionen leisten. Auch das Überwachungsprogrammodul PCS kann um weitere Schritte erweitert werden, z.B. um den erwähnten Subskriptionsschritt, bei dem sich das Überwachungsprogrammodul PCS bei dem Alarmerfassungsprogrammodul PAS anmeldet.

Das Überwachungsprogrammodul PCS kann nach jedem vollständigen Ablauf vom dem Steuermittel CPU nach einer vorbestimmten Periode oder nach einer Eingabe durch den Bediener an dem Tastenfeld KEY erneut aufgerufen werden oder aber - dies ist in Figur 4 nicht dargestellt - von sich aus vor dem Schritt ENDPC wieder zu dem Schritt SC1 zurückverzweigen und dabei z.B. einen Worteschritt ausführen, bei dem das Überwachungsprogrammodul PCS vor dem Beginn des Schrittes SC1 noch eine vorbestimmte Zeit verharrt.

Ähnlich wie die Alarmeinrichtung AS mehrere Überwachungseinrichtungen bedienen kann, kann auch das Alarmerfassungsprogrammodul PAS neben dem Überwachungsprogrammodul PCS auch weitere, ähnliche Überwachungsprogrammodule bedienen.

## Patentansprüche

1. Verfahren zur Bearbeitung von Alarmmeldungen mindestens eines Netzelementes (NE1, NE2), das von einer Überwachungseinrichtung (CS) überwacht wird und das Alarmmeldungen sendet, mit den Schritten:
- Senden von Alarmmeldungen von dem Netzelement an eine Alarmeinrichtung (AS),
- Empfang der Alarmmeldungen durch die Alarmeinrichtung,
- Abspeichern der Alarmmeldungen in einem Speicher (MEM) durch die Alarmeinrichtung,
- Senden einer Abfrage nach gespeicherten Alarmmeldungen an die Alarmeinrichtung durch die Überwachungseinrichtung,
- Empfang der Abfrage durch die Alarmeinrichtung,
- Senden einer Antwort mit einer Information über die gespeicherten Alarmmeldungen an die Überwachungseinrichtung durch die Alarmeinrichtung,
- Auswerten der Antwort durch die Überwachungseinrichtung.

2. Verfahren nach Anspruch 1, dadurch gekennzeichnet daß die Alarmeinrichtung (AS) in der Antwort eine Information versendet, wieviele Alarmmeldungen von dem Netzelement durch die Alarmeinrichtung empfangen worden sind.

3. Verfahren nach Anspruch 1, dadurch gekennzeichnet, daß die Alarmeinrichtung (AS) in der Antwort eine Statusinformation versendet, ob die Alarmeinrichtung seit der letzten solchen Abfrage der Überwachungseinrichtung (CS) mindestens eine neue Alarmmeldung empfangen hat.

4. Verfahren nach Anspruch 1, dadurch gekennzeichnet, daß die Alarmeinrichtung (AS) eingehende Alarmmeldungen nach vorbestimmten Kriterien klassifiziert und daß die Alarmeinrichtung die Information in der Antwort an die Überwachungseinrichtung (CS) über die gespeicherten Alarmmeldungen gemäß dieser Klassifizierung gliedert.

5. Verfahren nach Anspruch 1, dadurch gekennzeichnet, daß die Überwachungseinrichtung (CS) an die Alarmeinrichtung (AS) eine Anmeldung sendet und daß die Alarmeinrichtung eine Anfrage nach Alarmmeldungen nur dann beantwortet wenn die Überwachungseinrichtung bei der Alarmeinrichtung angemeldet ist.

6. Verfahren nach Anspruch 1, dadurch gekennzeichnet, daß die Alarmeinrichtung (AS) anhand eines Zuordnungsmerkers ermittelt, ob das Netzelement von der Überwachungseinrichtung (CS) überwacht wird.

7. Programmodul (PAS) zur Bearbeitung von Alarmmeldungen mindestens eines Netzelementes (NE1, NE2), das von einer Überwachungseinrichtung (CS) überwacht wird und das Alarmmeldungen sendet, wobei das Programmodul eine erste Empfangsfunktionseinheit (ST1) aufweist, die so ausgestaltet ist, daß das Programmodul Alarmmeldungen empfangen kann, und eine Speicherfunktionseinheit (ST2) aufweist, die so ausgestaltet ist, daß das Programmodul die Alarmmeldungen in einem Speicher abspeichern kann, **dadurch gekennzeichnet, daß** das Programmodul eine zweite Empfangsfunktionseinheit (ST3) aufweist, die so ausgestaltet ist, daß das Programmodul eine Abfrage nach gespeicherten Alarmmeldungen von der Überwachungseinrichtung empfangen kann, und daß das Programmodul eine Sendefunktionseinheit (ST4, ST5) aufweist, die so ausgestaltet ist, daß das Programmodul eine Antwort mit einer Information über die gespeicherten Alarmmeldungen an die Überwachungseinrichtung senden kann.

8. Programmodul (PCS) zur Bearbeitung von Alarmmeldungen mindestens eines Netzelementes (NE1, NE2), das Alarmmeldungen an eine Alarmeinrichtung (AS) sendet, die die Alarmmeldungen abspeichert, **dadurch gekennzeichnet, daß** das Programmodul eine Sendefunktionseinheit (SC1) aufweist, die so ausgestaltet ist, daß das Programmodul eine Abfrage nach gespeicherten Alarmmeldungen an die Alarmeinrichtung senden kann, daß das Programmodul eine Empfangsfunktionseinheit (SC2) aufweist die so ausgestaltet ist, daß das Programmodul eine Antwort mit einer Information über die gespeicherten Alarmmeldungen empfangen kann, und daß das Programmodul eine Auswertefunktionseinheit (SC3) aufweist, die so ausgestaltet ist, daß das Programmodul die Antwort auswerten kann.

9. Server (AS) zur Bearbeitung von Alarmmeldungen mindestens eines Netzelementes (NE1, NE2), das von einer Überwachungseinrichtung (CS) überwacht wird und das Alarmmeldungen sendet, wobei der Server erste Empfangsmittel (IF1, IF2) aufweist, die so ausgestaltet sind, daß der Server Alarmmeldungen empfangen kann, und Speichermittel (MEM) aufweist, die so ausgestaltet sind, daß der Server die Alarmmeldungen abspeichern kann, **dadurch gekennzeichnet, daß** der Server zweite Empfangsmittel (IFCS) aufweist, die so ausgestaltet sind, daß der Server eine Abfrage nach gespeicherten Alarmmeldungen von der Überwachungseinrichtung empfangen kann, und daß der Server Sendemittel (IFCS) aufweist, die so ausgestaltet sind, daß der Server eine Antwort mit einer Information über die gespeicherten Alarmmeldungen an die Überwachungseinrichtung senden kann.

10. Überwachungseinrichtung (CS) zur Bearbeitung von Alarmmeldungen mindestens eines Netzelementes (NE1, NE2), das Alarmmeldungen an eine Alarmeinrichtung (AS) sendet, die die Alarmmeldungen abspeichert, **dadurch gekennzeichnet, daß** die Überwachungseinrichtung Sendemittel (IFAS) aufweist, die so ausgestaltet sind, daß die Überwachungseinrichtung eine Abfrage nach gespeicherten Alarmmeldungen an die Alarmeinrichtung senden kann, daß die Überwachungseinrichtung Empfangsmittel (IFAS) aufweist, die so ausgestaltet sind, daß die Überwachungseinrichtung eine Antwort mit einer Information über die gespeicherten Alarmmeldungen empfangen kann, und daß die Überwachungseinrichtung Auswertemittel (CPUS, MEMS) aufweist, die so ausgestaltet sind, daß die Überwachungseinrichtung die Antwort auswerten kann.

11. Speichermittel mit einem Programmodul (PAS) nach Anspruch 7.

12. Speichermittel mit einem Programmodul (PCS) nach Anspruch 8.
